# EUROPÄISCHE PATENTSCHRIFT

(11) **EP 1 678 812 B1**
(45) Veröffentlichungstag und Bekanntmachung des Hinweises auf die Patenterteilung: **14.03.2012**
(21) Anmeldenummer: 04790791.0
(22) Anmeldetag: 23.10.2004
(51) Int. Cl.: B26B 19/28, A61C 17/22, A61C 17/34, H02K 1/34, H02K 33/02

(54) **Elektrische Zahnbürste**
Electric tooth brush
Brosse à dents électrique

(30) Priorität: 29.10.2003 DE 10350445
(43) Veröffentlichungstag der Anmeldung: 12.07.2006
(73) Patentinhaber: Braun GmbH, 61476 Kronberg im Taunus (DE)
(72) Erfinder: KRESSNER, Gerhard, 63674 Altenstadt (DE); SCHRÖTER, Alexander, 65760 Eschborn (DE); JUNK, Christian, 65760 Eschborn (DE); HILFINGER, Peter, 61350 Bad Homburg (DE); REICK, Hansjörg, 61449 Steinbach (DE); KRAUS, Bernhard, 35619 Braunfels (DE); SCHOBER, Uwe, 61479 Glashütten-Schlossborn (DE)
(86) Internationale Anmeldenummer: PCT/EP2004/012000
(87) Internationale Veröffentlichungsnummer: WO 2005/043724

(56) Entgegenhaltungen:
- US-A- 4 187 452
- US-A- 4 543 718
- US-A- 5 528 411
- US-A- 5 613 259

## Beschreibung

Die Erfindung bezieht sich auf eine elektrische Zahnbürste mit einer elektrischen Antriebseinheit zur Erzeugung einer oszillierenden Bewegung.

Aus der DE 28 20 437 A1 ist eine elektrische Zahnbürste mit einem Schwingankermotor bekannt. Der Schwingankermotor versetzt eine Welle, die einen Bürstenteil trägt, in hin- und hergehende Drehbewegungen. Die Drehbewegungen werden von Torsionsfedern und Dämpfungselementen beeinflußt, so daß sich ein gewünschter Bewegungsablauf einstellt.

Aus der US 5,613,259 ist eine elektrische Zahnbürste bekannt. Die Zahnbürste weist einen mechanischen Oszillator auf, der von einem Elektromotor angetrieben wird. Der Elektromotor wird abhängig von der Schwingungsfrequenz des mechanischen Oszillators, die mittels eines Sensors erfaßt wird, so angesteuert, daß der mechanische Oszillator auch bei variierender Last in Resonanz verbleibt. Der mechanische Oszillator wird durch ein Feder-Masse-System ausgebildet, das eine Schraubenfeder oder einen Torsionsstab aufweisen kann.

Um einen möglichst optimalen Betrieb der elektrischen Antriebseinheit der elektrischen Zahnbürste zur Erzeugung einer oszillierenden Bewegung zu erreichen, sollte diese mit einer Frequenz angeregt werden, die ihrer Resonanzfrequenz entspricht oder in der Nähe ihrer Resonanzfrequenz liegt. Die Resonanzfrequenz ändert sich allerdings nicht nur mit der Belastung der Antriebseinheit, sondern streut auch infolge der bei einer Serienfertigung auftretenden Fertigungstoleranzen. Diese Streuung kann zwar über eine Regelung der Anregungsfrequenz kompensiert werden. Eine solche Regelung erfordert aber einen zusätzlichen Herstellungsaufwand. Außerdem ist eine Änderung der Anregungsfrequenz bei manchen Anwendungen unerwünscht.

Der Erfindung liegt daher die Aufgabe zugrunde, eine elektrische Zahnbürste mit einer elektrische Antriebseinheit zur Erzeugung einer oszillierenden Bewegung mit einem möglichst geringen Aufwand möglichst optimal auszubilden.

Diese Aufgabe wird durch die Merkmalskombination des Anspruchs 1 gelöst.

Die erfindungsgemäß ausgebildete elektrische Zahnbürste weist einen Stator, einen Läufer und ein Torsionselement auf. Die Besonderheit der erfindungsgemäßen Zahnbürste besteht darin, daß ein auf das Torsionselement einwirkendes Abstimmelement zur mechanischen Abstimmung der Resonanzfrequenz der Antriebseinheit vorgesehen ist.

Die Erfindung hat den Vorteil, daß die Antriebseinheit der elektrischen Zahnbürste unabhängig von etwaigen Fertigungstoleranzen eine optimale Umsetzung der elektrischen Antriebsleistung in die oszillierende Bewegung ermöglicht und dadurch eine vergleichsweise geringe elektrische Leistung für den Betrieb der erfindungsgemäßen Antriebseinheit ausreicht.

Die erfindungsgemäße Zahnbürste ist vorzugsweise so ausgebildet, daß das Abstimmelement das Torsionselement an einer variierbaren Stelle des Torsionselements fixiert. Dabei kann das Abstimmelement beweglich und festlegbar am Stator angeordnet sein. Insbesondere ist das Abstimmelement parallel zur Längsachse der Antriebseinheit beweglich. Hierzu kann das Abstimmelement beispielsweise in wenigstens eine Nut im Stator eingreifen. Ein derartiger Aufbau läßt sich mit einem relativ geringen Aufwand realisieren und ermöglicht eine einfache Abstimmung der Resonanzfrequenz der erfindungsgemäßen Antriebseinheit.

Im Sinne einer einfachen Handhabung ist es besonders vorteilhaft, wenn das Abstimmelement als eine Klemmeinrichtung ausgebildet ist. Dabei kann das Abstimmelement beispielsweise zwei Teile und wenigstens ein Verbindungselement zur Annäherung der beiden Teile aufweisen.

Das Torsionselement ist in der Regel am Läufer fixiert. Der Läufer weist in einem bevorzugten Ausführungsbeispiel der Antriebseinheit eine Hohlwelle auf. Dabei ist es besonders vorteilhaft, wenn das Torsionselement wenigstens partiell innerhalb der Hohlwelle angeordnet ist. Auf diese Weise kann die erfindungsgemäße Antriebseinheit sehr kompakt ausgebildet werden. Das Torsionselement ist vorzugsweise als ein Torsionsstab ausgebildet, der sich mit sehr geringen Toleranzen herstellen läßt und insbesondere in Kombination mit der Hohlwelle kaum Bauraum beansprucht.

Die Antriebseinheit kann über ein Gehäuse verfügen, das im Bereich des Abstimmelements eine Aussparung aufweist. Dadurch wird es ermöglicht, die Abstimmung der Resonanzfrequenz zu einem Zeitpunkt vorzunehmen, zu dem die erfindungsgemäße Antriebseinheit bereits vollständig zusammengebaut ist.

In einem bevorzugten Ausführungsbeispiel der Antriebseinheit weist der Stator Permanentmagnete und wenigstens eine Spule auf. Der Läufer weist bevorzugt einen Anker aus einem magnetisierbaren Material auf.

Bei einer elektrischen Zahnbürste besteht häufig der Wunsch nach einem netzunabhängigen Betrieb mittels eines Akkus, so daß sich die vergleichsweise geringe Leistungsaufnahme der erfindungsgemäßen Antriebseinheit positiv auf die mit einer Akkuladung erzielbare Gebrauchsdauer des Geräts auswirkt.

Die Erfindung wird nachstehend anhand der in der Zeichnung dargestellten Ausführungsbeispiele näher erläutert, bei denen die erfindungsgemäße Antriebseinheit jeweils für den Einsatz bei einer elektrischen Zahnbürste vorgesehen ist.

Es zeigen:
- Fig. 1: ein erstes Ausführungsbeispiel für eine erfindungsgemäß ausgebildete Antriebseinheit in Aufsicht,
- Fig. 2: das erste Ausführungsbeispiel der erfindungsgemäßen Antriebseinheit im Längsschnitt entlang der in Fig. 1 eingezeichneten Linie A-A,
- Fig. 3: das erste Ausführungsbeispiel der erfindungsgemäßen Antriebseinheit in einem weiteren Längsschnitt, bei dem die Schnittebene relativ zu Fig. 2 um 90 Grad um die Längsachse der erfindungsgemäßen Antriebseinheit gedreht ist,
- Fig. 4: das erste Ausführungsbeispiel der erfindungsgemäßen Antriebseinheit in einem Querschnitt entlang der in Fig. 1 eingezeichneten Linie B-B,
- Fig. 5: das erste Ausführungsbeispiel der erfindungsgemäßen Antriebseinheit in einem Querschnitt entlang der in Fig. 1 eingezeichneten Linie C-C und
- Fig. 6: ein zweites Ausführungsbeispiel der erfindungsgemäßen Antriebseinheit in einem Querschnitt entlang der in Fig. 1 eingezeichneten Linie C-C.

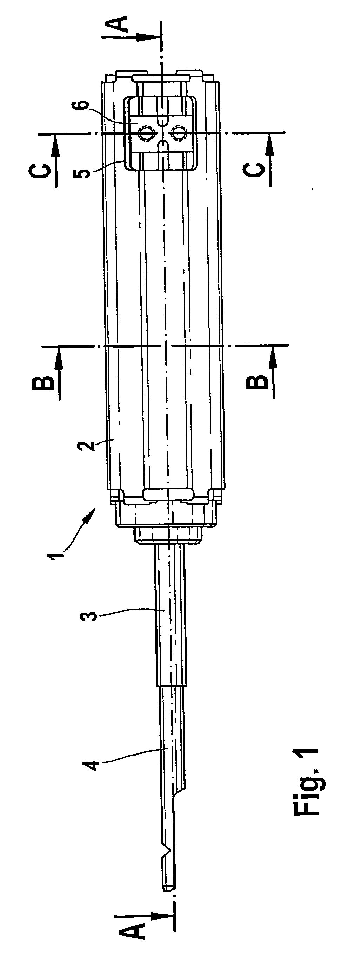

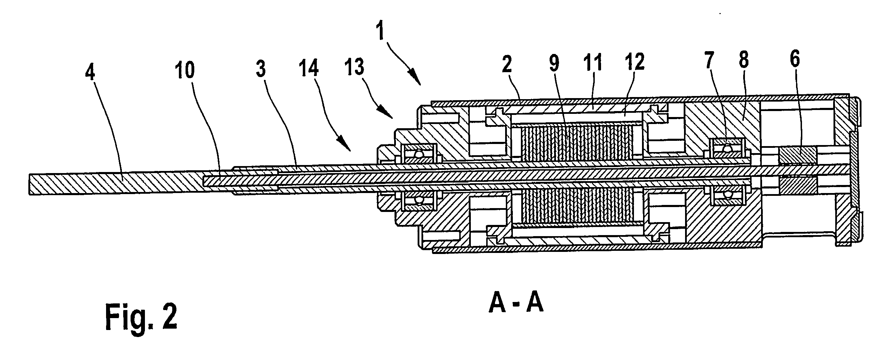

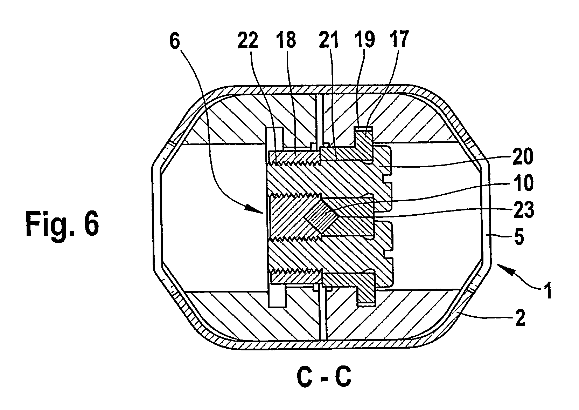

Fig. 1 zeigt ein Ausführungsbeispiel für eine erfindungsgemäß ausgebildete Antriebseinheit 1 einer elektrischen Zahnbürste in Aufsicht. Die Antriebseinheit 1 weist ein langgestrecktes
Gehäuse 2 auf, aus dem auf einer Stirnseite eine Hohlwelle 3 austritt, die sich parallel zur Längsachse der Antriebseinheit 1 erstreckt. In das außerhalb des Gehäuses 2 befindliche axiale Ende der Hohlwelle 3 ist ein Anschlußstück 4 zur Aufnahme einer nicht figürlich dargestellten Aufsteckzahnbürste koaxial eingesetzt und drehfest mit der Hohlwelle 3 verbunden. Auf einer seiner Längsseiten weist das Gehäuse 2 in einem von der Stirnseite, an der die Hohlwelle 3 aus dem Gehäuse 2 austritt, abgewandten Endbereich eine fensterförmige Ausnehmung 5 auf. Durch die Ausnehmung 5 hindurch ist ein im Inneren des Gehäuses 2 angeordnetes Verschiebestück 6 sichtbar, das parallel zur Längsachse der Antriebseinheit 1 verschiebbar ist und im folgenden noch näher beschrieben wird. Der innere Aufbau der Antriebseinheit 1 geht im einzelnen aus den Schnittdarstellungen der Fig. 2 bis 5, bzw. für ein zweites Ausführungsbeispiel der aus der Schnittdarstellung der Fig. 6, hervor.

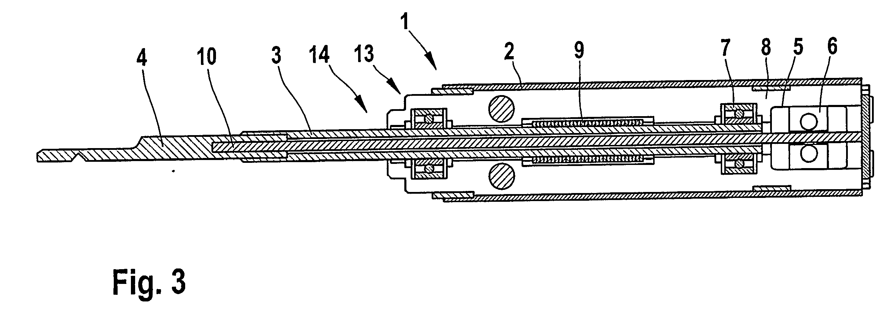

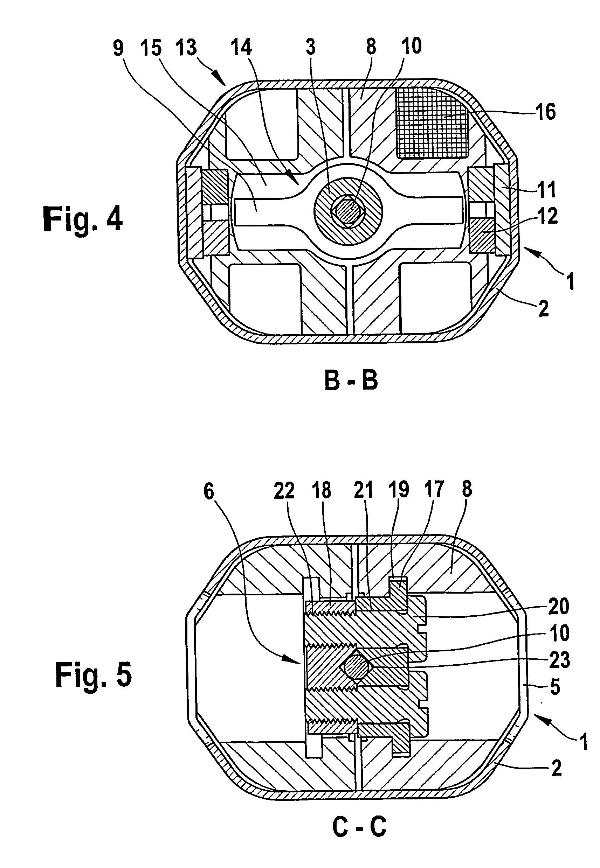

Fig. 2 zeigt das erste Ausführungsbeispiel der Antriebseinheit 1 in einem Längsschnitt entlang der in Fig. 1 eingezeichneten Linie A-A. Einen weiteren Längsschnitt, bei dem die Schnittebene relativ zu Fig. 2 um 90 Grad um die Längsachse der Antriebseinheit 1 gedreht ist, zeigt Fig. 3. Wie aus den Fig. 2 und 3 hervorgeht, setzt sich die Hohlwelle 3 innerhalb des Gehäuses 2 fort und ist in zwei Lagern 7 relativ zum Gehäuse 2 drehbar gelagert. Die Lager 7 sind in einem Wickelkörper 8 angeordnet. Im Bereich zwischen den beiden Lagern 7 ist ein Anker 9 drehfest auf der Hohlwelle 3 angeordnet. Innerhalb der Hohlwelle 3 erstreckt sich koaxial zur Hohlwelle 3 ein Torsionsstab 10, der mit seinen beiden axialen Enden aus der Hohlwelle 3 herausragt. Im Bereich seines ersten axialen Endes ist der Torsionsstab 10 drehfest mit dem Anschlußstück 4 und damit auch mit der Hohlwelle 3 verbunden. In der Nähe seines zweiten axialen Endes ist der Torsionsstab 10 drehfest im Verschiebestück 6 eingeklemmt und dadurch drehfest mit dem Gehäuse 2 verbunden. Somit wird durch den Torsionsstab 10 eine drehfedernde Aufhängung der Hohlwelle 3 inklusive des Anschlußstücks 4 und des Ankers 9 am Gehäuse 2 ausgebildet. Radial benachbart zum Anker 9 sind auf Trägerplatten 11 Permanentmagnete 12 angeordnet. Die Trägerplatten 11 sind einander diametral gegenüberliegend an der Innenseite des Gehäuses 2 angeordnet. Durch die in den Fig. 3 und 4 dargestellten Komponenten werden ein ortsfester Stator 13 und ein relativ zum Stator 13 drehbeweglicher Läufer 14 ausgebildet. Dem Stator 13 können das Gehäuse 2, der Wickelkörper 8, die Trägerplatte 11 und die Permanentmagnete 12 zugeordnet werden. Bestandteile des Läufers 14 sind die Hohlwelle 3 mit dem Anschlußstück 4 und der Anker 9. Über den Torsionsstab 10 sind der Stator 13 und der Läufer 14 miteinander drehelastisch gekoppelt.

Fig. 4 zeigt das erste Ausführungsbeispiel der Antriebseinheit 1 in einem Querschnitt entlang der in Fig. 1 eingezeichneten Linie B-B. Aus Fig. 4 geht hervor, daß der Anker 9 eine langgestreckte Querschnittsform aufweist und in einem länglichen Hohlraum 1 5 derart angeordnet ist, daß er geringfügig in beide Drehrichtungen relativ zu der dargestellten Ruhelage verdreht werden kann. Auf dem Wickelkörper 8 ist wenigstens eine Spule 16 angeordnet, die in Fig. 4 nur zum Teil dargestellt ist. Bei einem Stromfluß durch die Spule 16 entsteht im Anker 9 ein Magnetfeld, so daß es im Bereich der den Permanentmagneten 12 benachbarten Radialflächen des Ankers 9 zu einer magnetischen Wechselwirkung mit den Permanentmagneten 12 kommt, durch die der Anker 9 aus seiner Ruhelage ausgelenkt und dadurch die Hohlwelle 3 geringfügig gedreht wird. Durch eine wechselnde Bestromung der Spule 16 kann erreicht werden, daß die Auslenkung des Ankers 9 aus der Ruhelage abwechselnd in entgegengesetzte Drehrichtungen erfolgt und dadurch eine oszillierende Drehbewegung des Läufers 14 entsteht. Diese oszillierende Drehbewegung wird durch den Torsionsstab 10 unterstützt, der den Läufer 14 jeweils in die Ruhelage des Ankers 9 zurückdreht und mit dem Läufer 14 ein schwingungsfähiges Feder-Masse-System bildet. Die Amplitude der oszillierenden Drehbewegung wird dann besonders groß, wenn die Anregung durch die stromdurchflossene Spule 16 mit der Resonanzfrequenz des Feder-Masse-Systems erfolgt. Im Bereich der Resonanzfrequenz läßt sich die Anregungsenergie am effektivsten übertragen, so daß die für eine gewünschte Amplitude benötigte Anregungsenergie einen minimalen Wert annimmt. Um die Antriebseinheit 1 möglichst effizient betreiben zu können, sollte daher die Resonanzfrequenz des Feder-Masse-Systems möglichst exakt mit der Anregungsfrequenz oder mit einem vorgegebenen Wert in der Nähe der Anregungsfrequenz übereinstimmen. Allerdings kommt es bei der Fertigung mehrerer Antriebseinheiten 1 infolge von herstellungsbedingten Toleranzen der Komponenten der Antriebseinheit 1 zu einer Streuung der Resonanzfrequenzen. Um dem entgegenzuwirken, wird im Rahmen der Erfindung bei jeder Antriebseinheit 1 nach ihrem Zusammenbau ein mechanischer Abgleich der Resonanzfrequenz des Feder-Masse-System vorgenommen. Der Abgleich erfolgt jeweils dadurch, daß die wirksame Länge des Torsionsstabs 10 mit Hilfe des Verschiebestücks 6 variiert wird. Die diesbezügliche Vorgehensweise wird im einzelnen anhand von Fig. 5 erläutert.

Fig. 5 zeigt das erste Ausführungsbeispiel der Antriebseinheit 1 in einem Querschnitt entlang der in Fig. 1 eingezeichneten Linie C-C. Der Schnitt verläuft somit durch das Verschiebestück 6, das aus einem Oberteil 17 und einem Unterteil 18 besteht. Die Trennebene zwischen dem Oberteil 17 und dem Unterteil 18 des Verschiebestücks 6 verläuft parallel zur Längsachse der Antriebseinheit 1. Das Oberteil 17 des Verschiebestücks 6 greift beidseits in je eine parallel zur Längsachse der Antriebseinheit 1 verlaufende Nut 19 im Wickelkörper 8 ein und ist ausschließlich in dieser Richtung beweglich. Mittels zweier Schrauben 20, die in Durchgangsbohrungen 21 des Oberteils 17 des Verschiebestücks 6 eingeführt sind und in Gewindebohrungen 22 des Unterteils 18 des Verschiebestücks 6 eingreifen, ist das Oberteil 17 mit dem Unterteil 18 verschraubt. Beim Verschrauben wird der Torsionsstab 10 zwischen zwei Keilnuten 23 eingeklemmt, die im Oberteil 17 und im Unterteil 18 des Verschiebestücks 6 parallel zur Längsachse der Antriebseinheit 1 ausgebildet sind und deren Wandflächen gegen die zylindrische Mantelfläche des Torsionsstabs 10 gepreßt werden. Dadurch wird der Torsionsstab 10 kraftschlüssig am Verschiebestück 6 fixiert. Gleichzeitig wird die Bewegungsmöglichkeit des Verschiebestücks 6 parallel zur Längsachse der Antriebseinheit 1 aufgehoben, da der Torsionsstab 10 in dieser Richtung starr ausgebildet ist. Zum Lösen und Festziehen sind die Schrauben 20 über die Aussparung 5 im Gehäuse 2 zugänglich. Der Abgleich der Resonanzfrequenz des Feder-Masse-Systems der Antriebseinheit 1 kann folgendermaßen durchgeführt werden:

Der Torsionsstab 10 wird in der Drehposition im Verschiebestück 6 eingeklemmt, die er als Ruheposition infolge der Einwirkung der Permanentmagnete 12 auf den Anker 9 einnimmt. Bevor der Torsionsstab 10 durch Festziehen der Schrauben 20 fixiert wird, wird das Verschiebestück 6 in eine Position geschoben, in der sich voraussichtlich die gewünschte Resonanzfrequenz des Feder-Masse-Systems ergibt und dadurch eine Voreinstellung vorgenommen. Dies beruht darauf, daß mit dem Verschiebestück 6 die wirksame Länge des Torsionsstabs 10 eingestellt und dementsprechend die Resonanzfrequenz des Feder-Masse-Systems beeinflußt wird. Die wirksame Länge des Torsionsstabs 10 entspricht der Entfernung zwischen der Position der Fixierung des Torsionsstabs 10 am Anschlußstück 4 und der Position der Fixierung des Torsionsstabs 10 am Verschiebestück 6. Durch eine Verkürzung der wirksamen Länge des Torsionsstabs 10, d. h. durch ein Annähern des Verschiebestücks 6 an die Hohlwelle 3, wird die Resonanzfrequenz erhöht. Umgekehrt wird die Resonanzfrequenz durch eine Verlängerung der wirksamen Länge des Torsionsstabs 10, die durch eine Vergrößerung der Entfernung zwischen dem Verschiebestück 6 und der Hohlwelle 3 erzielt wird, erniedrigt. Nach Durchführung der Voreinstellung wird die Antriebseinheit 1 durch eine pulsförmige Anregung in eine oszillierend Bewegung versetzt und aus dem Abklingverhalten der oszillierenden Bewegung die aktuelle Resonanzfrequenz ermittelt, die das Feder-Masse-System für die aktuelle Position des Verschiebestücks 6 aufweist. Aus der Abweichung der aktuellen Resonanzfrequenz von der gewünschten Resonanzfrequenz wird beispielsweise mittels einer empirisch erstellten Tabelle eine Strecke ermittelt, um die das Verschiebestück 6 zur Erreichung der gewünschten Resonanzfrequenz zu verschieben ist. Anschließend wird das Verschiebestück 6 um die ermittelte Strecke verschoben. Durch eine nochmalige pulsförmige Anregung kann die Position des Verschiebestücks 6 überprüft werden. Falls erforderlich, wird das Verschiebestück 6 nachjustiert, bis die aktuelle Resonanzfrequenz des Feder-Masse-Systems mit einer vorgegebenen Genauigkeit der gewünschten Resonanzfrequenz entspricht. Dann wird das Verschiebestück 6 dauerhaft fixiert.

Wie aus den Fig. 4 und 5 hervorgeht, weist der Torsionsstab 10 beim ersten Ausführungsbeispiel der erfindungsgemäßen Antriebseinheit 1 einen kreisförmigen Querschnitt auf. Alternativ dazu sind im Rahmen der Erfindung auch andersartige Ausbildungen des Torsionsstabs 10 möglich. Eine mögliche Variante ist in Fig. 6 dargestellt.

Fig. 6 zeigt ein zweites Ausführungsbeispiel der Antriebseinheit 1 in einem Querschnitt entlang der in Fig. 1 eingezeichneten Linie C-C. Beim zweiten Ausführungsbeispiel weist der Torsionsstab 10 einen quadratischen Querschnitt auf. Die Abweichung von der rotationssymmetrischen Ausbildung des Torsionsstabs 10 eröffnet beim zweiten Ausführungsbeispiel die Möglichkeit, den Torsionsstab 10 mit dem Verschiebestück 6 formschlüssig gegen Verdrehen zu sichern. Dabei können die beim ersten Ausführungsbeispiel für die Fixierung des Torsionsstabs 10 beim Oberteil 17 und beim Unterteil 18 des Verschiebestücks 6 vorgesehenen Keilnuten 23 beibehalten werden. Auch im Hinblick auf seinen sonstigen Aufbau und auf seine Funktionsweise entspricht das zweite Ausführungsbeispiel der Antriebseinheit 1 dem ersten Ausführungsbeispiel.

## Patentansprüche

1. Elektrische Zahnbürste mit einer elektrischen Antriebseinheit zur Erzeugung einer oszillie-renden Bewegung, mit einem Stator (13), einem Läufer (1 4) und einem Torsionselement (10), **gekennzeichnet durch** ein auf das Torsionselement (10) einwirkendes Abstimmelement (6) zur mechanischen Abstimmung der Resonanzfrequenz der Antriebseinheit, wobei das Abstimmelement (6) das Torsionselement (10) an einer variierbaren Stelle des Torsionselements (10) fixiert.

2. Elektrische Zahnbürste nach Anspruch 1, wobei der der Läufer (14) eine Hohlwelle (3) aufweist und das Torsionselement (10) wenigstens partiell innerhalb der Hohlwelle (3) angeordnet ist.

3. Elektrische Zahnbürste nach einem der vorhergehenden Ansprüche, wobei das Abstimmelement (6) beweglich und festlegbar am Stator (13) angeordnet ist.

4. Elektrische Zahnbürste nach Anspruch 3, wobei das Abstimmelement (6) parallel zur Längsachse der Antriebseinheit (1) beweglich ist.

5. Elektrische Zahnbürste nach einem der Ansprüche 3 oder 4, wobei das Abstimmelement (6) in wenigstens eine Nut (19) im Stator (13) eingreift.

6. Elektrische Zahnbürste nach einem der vorhergehenden Ansprüche, wobei das Abstimmelement (6) als eine Klemmeinrichtung ausgebildet ist.

7. Elektrische Zahnbürste nach Anspruch 6, wobei das Abstimmelement zwei Teile (17, 18) und wenigstens ein Verbindungselement (20) zur Annäherung der beiden Teile (17, 18) aufweist.

8. Elektrische Zahnbürste nach einem der vorhergehenden Ansprüche, wobei das Torsionselement (10) am Läufer (14) fixiert ist.

9. Elektrische Zahnbürste nach einem der vorhergehenden Ansprüche, wobei das Torsionselement (10) als ein Torsionsstab ausgebildet ist.

10. Elektrische Zahnbürste nach einem der vorhergehenden Ansprüche, wobei ein Gehäuse (2) der elektrischen Antriebseinheit vorgesehen ist, das im Bereich des Abstimmelements (6) eine Aussparung (5) aufweist.

## Claims

1. An electric toothbrush with an electric drive unit to generate an oscillating motion, with a stator (13), a rotor (14), and a torsion element (10), **characterized by** a tuning element (6) acting on the torsion element (10) to mechanically tune the resonance frequency of the drive unit, wherein the tuning element (6) fixes the torsion element (10) at a variable part of the torsion element (10).

2. The electric toothbrush according to claim 1, wherein the rotor (14) has a hollow shaft (3), and the torsion element (10) is arranged at least partially within the hollow shaft (3).

3. The electric toothbrush according to any one of the preceding claims, wherein the tuning element (6) is arranged movable and fixable at the stator (13).

4. The electric toothbrush according to claim 3, wherein the tuning element (6) is movable parallel to the longitudinal axis of the drive unit (1).

5. The electric toothbrush according to any one of the claims 3 or 4, wherein the tuning element (6) engages in at least one groove (19) in the stator (13).

6. The electric toothbrush according to any one of the preceding claims, wherein the tuning element (6) is designed as a clamping device.

7. The electric toothbrush according to claim 6, wherein the tuning element has two parts (17, 18) and at least one connecting element (20) to converge the two parts (17, 18).

8. The electric toothbrush according to any one of the preceding claims, wherein the torsion element (10) is fixed at the rotor (14).

9. The electric toothbrush according to any one of the preceding claims, wherein the torsion element (10) is designed as a torsion rod.

10. The electric toothbrush according to any one of the preceding claims, wherein a housing (2) of the electric drive unit is provided that has a recess (5) in the region of the tuning element (6).

## Revendications

1. Brosse à dents électrique comprenant une unité d'entraînement électrique permettant de générer un mouvement oscillant, un stator (13), un rotor (14) et un élément de torsion (10), **caractérisée par** un élément d'ajustement (6) agissant sur l'élément de torsion (10) et permettant l'ajustement mécanique de la fréquence de résonance de l'unité d'entraînement, l'élément d'ajustement (6) étant fixé à l'élément de torsion (10) à un endroit variable de l'élément de torsion (10).

2. Brosse à dents électrique selon la revendication 1, dans laquelle le rotor (14) présente un arbre creux (3) et l'élément de torsion (10) est disposé au moins partiellement dans l'arbre creux (3).

3. Brosse à dents électrique selon l'une des revendications précédentes, dans laquelle l'élément d'ajustement (6) est monté mobile et de façon à pouvoir être fixé au stator (13).

4. Brosse à dents électrique selon la revendication 3, dans laquelle l'élément d'ajustement (6) est mobile parallèlement à l'axe longitudinal de l'unité d'entraînement (1).

5. Brosse à dents électrique selon l'une des revendications 3 ou 4, dans laquelle l'élément d'ajustement (6) s'engage dans au moins une rainure (19) dans le stator (13).

6. Brosse à dents électrique selon l'une des revendications précédentes, dans laquelle l'élément d'ajustement (6) est conçu comme un dispositif de serrage.

7. Brosse à dents électrique selon la revendication 6, dans laquelle l'élément d'ajustement présente deux pièces (17, 18) et au moins un élément de liaison (20) permettant de rapprocher les deux pièces (17, 18).

8. Brosse à dents électrique selon l'une des revendications précédentes, dans laquelle l'élément de torsion (10) est fixé au rotor (14).

9. Brosse à dents électrique selon l'une des revendications précédentes, dans laquelle l'élément de torsion (10) est conçu comme une barre de torsion.

10. Brosse à dents électrique selon l'une des revendications précédentes, dans laquelle l'unité d'entraînement électrique prévoit un boîtier (2) qui présente un évidement (5) au niveau de l'élément d'ajustement (6).
